# EUROPEAN PATENT APPLICATION

(11) **EP 4 465 385 A1**
(43) Date of publication of application: **20.11.2024**
(21) Application number: 22918941.0
(22) Date of filing: 10.03.2022
(51) Int. Cl.: H01M 4/62, H01M 4/139

(54) **NANOCELLULOSE-BASED AQUEOUS BINDER AND SLURRY FOR SECONDARY BATTERY ELECTRODE**

(30) Priority: 10.01.2022 KR 20220003527
(71) Applicant: Hansol Chemical Co., Ltd, Seoul 06169 (KR)
(72) Inventor: GWON, Hyeon Ji, Jeollabuk-do 55321 (KR); HAN, Jaehee, Jeollabuk-do 55321 (KR); KIM, Chang Beom, Jeollabuk-do 55321 (KR); PARK, Ji Hye, Jeollabuk-do 55321 (KR); RYU, Jaeho, Daejeon 34326 (KR); LEE, Minwoo, Daejeon 34326 (KR); JUNG, Kyung A, Daejeon 34326 (KR)
(74) Representative: Gevers Patents
(86) International application number: PCT/KR2022/003335
(87) International publication number: WO 2023/132404

(57) **Abstract**

The present invention provides a water-based binder for nanocellulose-based secondary battery electrode, comprising:
a latex particle with a core-shell structure comprising: a core containing a
rubbery polymer; and a shell formed by combining one or two monomers selected from the group consisting of an acryl-based monomer and a non-acryl-based monomer on the surface of the core through a chemical reaction; and
a nanocellulose interacts with a functional group of the shell surface.

## Description

### FIELD OF THE INVENTION

The present invention concerns a nanocellulose-based water-based binder and slurry for use in manufacturing electrodes for lithium secondary batteries.

### DESCRIPTION OF THE RELATED ART

An electrode for lithium secondary battery is generally manufactured by applying slurry containing active material and binder onto a metal current collector and drying the slurry. For example, slurry for electrode production is obtained by mixing and kneading negative active material, binder, and a dispersant. A slurry for use as water-based binders including styrene-butadiene rubber (SBR) and carboxylmethylcellulose (CMC) are known in the art. In the process of coating and drying the electrode with this existing SBR water-based binder, a migration occurs in which evenly dispersed SBR particles move to the upper layer of the electrode along with the evaporated moisture. As a result, the binding force of the electrode is decreased. Therefore, research on new binder-related technology that can suppress this movement phenomenon is required.

### SUMMARY OF THE INVENTION

The purpose of the present invention is to solve the problems of conventional art. Specifically, by including latex particles with a core-shell structure and nanocellulose, a strong hydrogen bond is formed between latex particles and nanocellulose. As a result, a migration of the upper layer of the electrode of SBR, which occurs in conventional art, is suppressed. Additionally, it is provided an aqueous binder and slurry for nanocellulose-based secondary battery electrodes that can improve the bonding power of electrodes.

A water-based binder for nanocellulose-based secondary battery electrode according to an exemplary embodiment includes a latex particle with a core-shell structure comprising: a core containing a rubbery polymer; and a shell formed by combining one or two monomers selected from the group consisting of an acryl-based monomer and a non-acryl-based monomer on the surface of the core through a chemical reaction; and a nanocellulose interacts with a functional group of the shell surface.

The nanocellulose may be selected from the group consisting of one or more types of cellulose nanofiber (CNF), cellulose nanocrystal (CNC), and bacterial cellulose (BC).

The nanocellulose may be 0.01 wt% to 1.0 wt% compared to the total mass of the latex particle solid.

The chemical reaction may be a polymerization reaction.

The interaction may be a hydrogen bond.

The functional group on the shell surface may be at least one selected from the group including carbonyl group, carboxyl group, and nitrile group.

The rubbery polymer may be one or more types selected from the group consisting of: butadiene rubber, acryl rubber, ethylene-propylene copolymer rubber, styrene-butadiene copolymer rubber, acrylonitrile-butadiene copolymer rubber, isoprene rubber, ethylene-propylene-diene terpolymer rubber, polyorganosiloxane-polyalkyl(metha)acrylate rubber composite, and a mixture thereof.

The acryl-based monomer may be one or more types selected from the group consisting of: methyl (metha)acrylate, ethyl (metha)acrylate, n-propyl (metha)acrylate, isopropyl (metha)acrylate, n-butyl (metha)acrylate, t-butyl (metha)acrylate, isobutyl (metha)acrylate, 2-ethylhexyl (metha)acrylate, 2-ethylbutyl (metha)acrylate, pentyl (metha)acrylate, hexyl (metha)acrylate, cyclohexyl (metha)acrylate, n-octyl (metha)acrylate, isooctyl (metha)acrylate, isononyl (metha)acrylate, decyl (metha)acrylate, dodecyl (metha)acrylate, tridecyl (metha)acrylate, tetradecyl (metha)acrylate, octadecyl (metha)acrylate and isobonyl (metha)acrylate.

The non-acryl-based monomer may be one or more types selected from the group consisting of: (metha)acrylamide, N-methyl (metha)acrylamide, N,N-dimethyl (metha)acrylamide, (metha)acrylonitrile, N-vinyl pyrrolidone, N-vinyl caprolactam, N-vinyl caprolactone, styrene, 2-vinyl pyridine, 4-vinyl pyridine and vinyl acetate.

The slurry for a nanocellulose-based secondary battery electrode according to an exemplary embodiment may include the above-described water-based binder, a negative active material, and a thickener.

The thickener may be one or more types selected from the group consisting of: cellulose-based polymers such as carboxylmethylcellulose, methylcellulose, and hydroxypropylcellulose, and their ammonium and alkalimetal salts; (modified) poly(metha)acrylic acid and its ammonium salts and alkalimetal salts; polyvinylalcohol such as (modified) polyvinylalcohol, acrylic acid or a copolymer of acrylic acid salt and vinylalcohol, maleic anhydride or maleic acid, or copolymer of fumaric acid and vinylalcohol; polyethyleneglycol; polyethylene oxide; modified polyacrylic acid; oxidation starch; phosphoric acid starch; casein; and acrylonitrile-butadiene copolymer hydride.

A secondary battery electrode according to an exemplary embodiment may be manufactured using the slurry described above.

The secondary battery electrode according to an exemplary embodiment may have a peeling strength of 8.5 gf/cm or more before vacuum-drying in the manufacturing process and a peeling strength of 9.0 gf/cm or more after vacuum-drying.

An aqueous binder for a nanocellulose-based secondary battery electrode according to an exemplary embodiment has excellent electrode binding ability by suppressing migration of the binder due to electrode drying and uniform distribution of the binder within the electrode.

In addition, the slurry for nanocellulose-based secondary battery electrode according to an exemplary embodiment has improved viscosity and excellent slurry stability.

### BRIEF DESCRIPTION OF THE DRAWINGS

FIG. 1 is a photograph of the agglomeration and surface condition of the binder manufactured in Comparative Example 3, exemplary embodiment 1, and exemplary embodiment 2 of the present invention with the naked eye.
FIG. 2 is a graph showing the relationship between the shear strain and viscosity of the slurry of Comparative Example 2 and exemplary embodiments 1 to 3 of the present invention in logarithmic scale.
FIG. 3 is a graph comparing the bonding strength of the electrodes before and after vacuum-drying in the manufacturing process after manufacturing the electrodes of Comparative Example 2, Comparative Example 3, and exemplary embodiments 1 to 3 of the present invention.
FIG. 4 is a picture briefly expressing the SAICAS measurement method performed in Experimental Example 5 of the present invention.
FIG. 5 is a graph comparing the horizontal direction force applied during SAICAS measurement at various cutting depths of the composite layer manufactured using Comparative Example 2, Comparative Example 3, and exemplary embodiment 1 to 3 of the present invention.

### DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/having/containing" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless specifically stated, % means wt%, and 1 ppm is 0.0001 wt%.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art d°Cument and the currently disclosed contents and are not interpreted as ideal or formal meaning unless defined.

Hereinafter, an exemplary embodiment will be described in detail so that a person of an ordinary skill can easily practice it in the technical field to which the present invention belongs. As those skilled in the art would realize, the described embodiments may be modified in various different ways, all without departing from the spirit or scope of the present invention.

### A nanocellulose-water-based binder for secondary battery electrode

A water-based binder for nanocellulose-based secondary battery electrode according to an exemplary embodiment includes a latex particle with a core-shell structure comprising: a core containing a rubbery polymer; and a shell formed by combining one or two monomers selected from the group consisting of an acryl-based monomer and a non-acryl-based monomer on the surface of the core through a chemical reaction; and a nanocellulose interacts with a functional group of the shell surface.

Specifically, the shell may be formed by combining one or two monomers selected from the group consisting of an acryl-based monomer and a non-acryl-based monomer through a polymerization reaction on the surface of the core. Specifically, the shell can be formed by combining an acryl-based monomer and a non-acryl-based monomer on the surface of the core through a polymerization reaction.

By including nanocellulose, a latex particle with a core-shell structure that can form a strong hydrogen bond with nanocellulose can be fixed by nanocellulose, as described below. Due to this, it is possible to suppress the migration of core-shell structured latex particles to the upper layer of the electrode along with moisture evaporated during the electrode manufacturing process.

Therefore, even though the drying process is performed during electrode manufacturing, the distribution of binder within the electrode is maintained uniformly.

The nanocellulose may be selected from the group consisting of one or more types of cellulose nanofiber (CNF), cellulose nanocrystal (CNC), and bacterial cellulose (BC). Specifically, nanocellulose may be cellulose nanocrystal (CNC).

The functional group on the shell surface may be one or more selected from the group including carbonyl group, carboxyl group, and nitrile group. Specifically, it may be one or two types selected from the group containing a carbonyl group and a nitrile group. By including the functional group on the shell surface, a strong hydrogen bond can be formed with the hydroxy group (-OH) of nanocellulose.

A nanocellulose may be 0.01 wt% to 1.0 wt% compared to the total mass of the latex particle solid. Specifically, it may be 0.05 wt% to 0.9 wt%, and more specifically, it may be 0.05 wt% to 0.8 wt%. If the amount of nanocellulose added is too small, the dispersion improvement effect of the binder is reduced. The effect of suppressing the migration of core-shell structure latex particles in the electrode manufacturing process is also reduced. Because of this, the effect of improving the adhesion of electrodes manufactured using this is not sufficiently achieved. If there is too much, the hydrogen bonds between nanocellulose inside the binder and between nanocellulose and core-shell structured latex particles will significantly increase. Because of this, agglomeration is formed, which can lead to greatly deteriorate dispersion of the binder and the binding force of the electrode manufactured using it.

The rubbery polymer may be one or more types selected from the group consisting of: butadiene rubber, acryl rubber, ethylene-propylene copolymer rubber, styrene-butadiene copolymer rubber, acrylonitrile-butadiene copolymer rubber, isoprene rubber, ethylene-propylene-diene terpolymer rubber, polyorganosiloxane-polyalkyl(metha)acrylate rubber composite, and a mixture thereof. Specifically, the rubbery polymer may be styrene-butadiene copolymer rubber.

The acryl-based monomer may be one or more types selected from the group consisting of: methyl (metha)acrylate, ethyl (metha)acrylate, n-propyl (metha)acrylate, isopropyl (metha)acrylate, n-butyl (metha)acrylate, t-butyl (metha)acrylate, isobutyl (metha)acrylate, 2-ethylhexyl (metha)acrylate, 2-ethylbutyl (metha)acrylate, pentyl (metha)acrylate, hexyl (metha)acrylate, cyclohexyl (metha)acrylate, n-octyl (metha)acrylate, isooctyl (metha)acrylate, isononyl (metha)acrylate, decyl (metha)acrylate, dodecyl (metha)acrylate, tridecyl (metha)acrylate, tetradecyl (metha)acrylate, octadecyl (metha)acrylate and isobonyl (metha)acrylate. Specifically, the acryl-based monomer may be one or more types selected from the group consisting of n-butyl (metha)acrylate, t-butyl (metha)acrylate, isobutyl (metha)acrylate, and 2-ethylhexyl (metha)acrylate, and more specifically, it may be one or more of butyl (metha)acrylate and 2-ethylhexylmetaacrylate. More specifically, it may be butyl (metha)acrylate and 2-ethylhexylmetaacrylate.

The non-acryl-based monomer may be one or more types selected from the group consisting of: (metha)acrylamide, N-methyl (metha)acrylamide, N,N-dimethyl (metha)acrylamide, (metha)acrylonitrile, N-vinyl pyrrolidone, N-vinyl caprolactam, N-vinyl caprolactone, styrene, 2-vinyl pyridine, 4-vinyl pyridine and vinyl acetate. Specifically, the non-acryl-based monomer may be (metha)acrylonitrile.

### A nanocellulose-based slurry for secondary battery electrode

The nanocellulose-based slurry for a secondary battery electrode according to an exemplary embodiment may include the aqueous binder for the secondary battery electrode described above, a negative active material, and thickener. As the slurry contains the nanocellulose-water-based binder for the secondary battery electrode described above, the viscosity of the slurry is improved.

As the nanocellulose-based/water-based binder is the same as described above, repeated content will be omitted. The amount of nanocellulose-based/water-based binder added in slurry production may be 1 to 5 parts by weight for 100 parts by weight of slurry solid. Specifically, it may be 1 to 3 parts by weight for slurry solid 100 parts by weight.

A negative active material may be one or more types selected from the group consisting of: carbon and graphite materials capable of intercalation and deintercalation of lithium ions, Si-based materials, metals and compounds capable of alloying with lithium, composite materials of metals and their compounds with carbon and graphite materials, and lithium containing nitride, etc. A carbon and a graphite material include a natural graphite, an artificial graphite, an expanded graphite, a carbon fiber, a non-graphite carbon, carbon black, carbon nanotube, fullerene, activated carbon, hard carbon, and soft carbon. Si-based materials include Si, SiOx (0 < x < 2), Si-Y alloy (the Y is an alkali metal, alkaline-earth metal, group 13 element, group 14 element, transition metal, rare earth element or combination thereof.), Si-C composite or Si-based compound of the combination thereof, etc. Metals and elements that can be alloyed with lithium include Al, Si, Sn, Ag, Bi, Mg, Zn, In, Ge, Pb, Pd, Pt, and Ti. Specifically, the negative active material may be carbon and graphite material. The amount of negative active material added in slurry production may be 95 to 99 parts by weight for 100 parts by weight of slurry.

The thickener may be one or more types selected from the group consisting of: cellulose-based polymers such as carboxylmethylcellulose, methylcellulose, and hydroxypropylcellulose, and their ammonium and alkalimetal salts; (modified) poly(metha)acrylic acid and its ammonium salts and alkalimetal salts; polyvinylalcohol such as (modified) polyvinylalcohol, acrylic acid or a copolymer of acrylic acid salt and vinylalcohol, maleic anhydride or maleic acid, or copolymer of fumaric acid and vinylalcohol; polyethyleneglycol; polyethylene oxide; modified polyacrylic acid; oxidation starch; phosphoric acid starch; casein; and acrylonitrile-butadiene copolymer hydride. Specifically, the thickener may be carboxylmethylcellulose. If the viscosity of the slurry is too low, layer separation occurs. If the viscosity of the slurry is too high, uniform electrode coating is impossible. Therefore, by adding a thickener to the slurry, the slurry can be adjusted to an appropriate viscosity to impart electrode coating properties. The amount of thickener added in slurry production may be 0.5 to 1.5 parts by weight for 100 parts by weight of slurry.

The slurry according to an exemplary embodiment may further include solvent as needed. The solvent may be N-methylpyrrolidone, acetone or water, but is not limited to these and any solvent that can be used in the relevant technical field can be used.

### An electrode for a secondary battery

The secondary battery electrode according to an exemplary embodiment may be manufactured using the slurry described above. As for slurry, it is the same as described above, so repeated content is omitted. By using the above-described slurry, a secondary battery electrode with excellent bonding ability can be manufactured.

The secondary battery electrode may be a negative electrode. For the negative electrode, prepare a negative electrode current collector with conductivity. On the current collector, a negative electrode slurry, which is a mixture of distilled water, negative active material, carboxylmethylcellulose, and a nanocellulose-based aqueous binder for the secondary battery electrode, is coated. The coating method may use an applicator, doctor blade, dipping, brushing, etc. Afterwards, it can be manufactured by vacuum-drying at 80 °C to 150 °C for 5 to 60 minutes. The thickness of the negative electrode after vacuum-drying can be 20 µm to 150 µm.

The current collector is the site where electron movement occurs in the electrochemical reaction of the active material.

A negative electrode current collector can be manufactured with thicknesses from 5 µm to 30 µm.

The negative electrode current collector is not particularly limited as long as it has conductivity without causing chemical changes in the battery. For example, copper foil, nickel foil, stainless steel foil, titanium foil, nickel foam, copper foam, polymer substrate coated with conductive metal, or a combination thereof can be used.

The secondary battery electrode may have a peeling strength of 8.5 gf/cm or more before vacuum-drying in the manufacturing process and a peeling strength of 9.0 gf/cm or more after vacuum-drying.

Hereinafter, an exemplary embodiment will be described in detail so that a person of an ordinary skill can easily practice it in the technical field to which the present invention belongs. However, the present invention may be implemented in various different forms and is not limited to the exemplary embodiment described herein.

### Comparative Example 1

### (1) Preparation of binder

Using a high-pressure reactor, 140 parts by weight of distilled water, sodium dodecylbenzene sulfonate 1 to 0.5 parts by weight as a negative ion surfactant, a mixture of 1 ,3-butadiene and styrene in a 4:6 ratio as SBR seed, 3 parts by weight, itaconic acid 1 to 3 parts by weight was added to emulsify. Add an additional 100 parts by weight of 1 ,3-butadiene and styrene mixture in a 4:6 ratio and stir to emulsify, then add 0.3 parts by weight of potassium sulfite, a decomposition-type initiator, and proceed with the emulsion polymerization reaction to create the SBR binder.

### (2) Preparation of slurry

Using a total of 100 parts by weight of slurry solid as a reference, 97.4 parts by weight of graphite as active materials, 1.5 parts by weight of binder particles obtained above, and 1.1 parts by weight of carboxylmethyl cellulose were mixed. Distilled water was added here to adjust the solid of the slurry from 20 wt% to 80 wt%. This was uniformly applied to a Cu thin film with a thickness of 10 µm using an applicator, coated, dried, and rolled with a roll press to manufacture a negative electrode.

### Comparative Example 2

An SBR binder was manufactured in the same manner as Comparative Example 1, and after 4 hours, 4 parts by weight of acryl monomer (butyl (metha)acrylate 0.6 parts by weight, acrylo nitrile 0.2 parts by weight, and 2-ethylhexylmetaacrylate 3.2 parts by weight) and 0.2 parts by weight potassium sulfite, a decomposition-type initiator, were added and an emulsion polymerization reaction was performed to polymerize the binder of the core-shell structure of SBR-Acryl. A slurry and electrode were manufactured in the same manner as Comparative Example 1 using the obtained binder.

### Comparative Example 3

A binder was manufactured by adding 5 wt% of nanocellulose (CNC) compared to SBR-Acryl solid to a binder with a core-shell structure of SBR-Acryl manufactured in the same manner as in Comparative Example 2. A slurry and electrode were manufactured in the same manner as Comparative Example 1 using the obtained binder.

### Exemplary embodiment 1

A binder was manufactured by adding 0.1 wt% of nanocellulose (CNC) compared to SBR-Acryl solid to a binder with a core-shell structure of SBR-Acryl manufactured in the same manner as in Comparative Example 2. A slurry and electrode were manufactured in the same manner as Comparative Example 1 using the obtained binder.

### Exemplary embodiment 2

A binder was manufactured by adding 0.5 wt% of nanocellulose (CNC) compared to SBR-Acryl solid to a binder with a core-shell structure of SBR-Acryl manufactured in the same manner as Comparative Example 2. A slurry and electrode were manufactured in the same manner as Comparative Example 1 using the obtained binder.

### Exemplary embodiment 3

A binder was manufactured by adding 0.75 wt% of nanocellulose (CNC) compared to SBR-Acryl solid to a binder with a core-shell structure of SBR-Acryl manufactured in the same manner as Comparative Example 2. A slurry and electrode were manufactured in the same manner as Comparative Example 1 using the obtained binder.

### Experimental Example 1

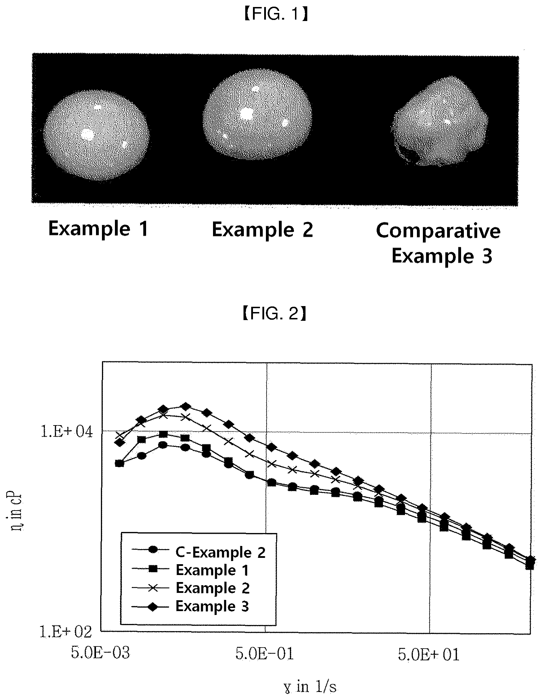

The agglomeration and surface condition of the binder manufactured in the Comparative Example 3, exemplary embodiment 1, and exemplary embodiment 2 were visually observed as shown in FIG. 1. Through this, it can be confirmed that the binders of exemplary embodiment 1 and exemplary embodiment 2 have smooth surfaces, but the binder of Comparative Example 3 has many curves in the surface due to internal agglomeration. This is the result of an excessive amount of nanocellulose (CNC) added compared to the SBR-Acryl solid, resulting in agglomeration as the hydrogen bonds between nanocellulose inside the binder and the hydrogen bonds between nanocellulose and the carbonyl group or nitrile group of the SBR-Acryl binder significantly increase.

### Experimental Example 2

The binders prepared in the Comparative Example 1, Comparative Example 2, and exemplary embodiment 1 were each mixed with distilled water to prepare a binder suspension composition containing 0.05 to 0.1 wt% of binder solid. The zeta potential of the binder suspension composition was measured at room temperature, and the results are shown in [Table 1] below.

Measurement of zeta potential generally measures the surface potential of the electrical double layer of a particle. When the zeta potential value is ±30 mV to ±60 mV (when the absolute value is 30 to 60 mV), the dispersion is judged to be stable. The larger the absolute value, the higher the surface potential value, so it is judged to be more stable.

**(Table 1)**

| | Comparati ve Example 1 | Comparati ve Example 2 | Comparati ve Example 3 | exemplary embodime nt 1 | exemplary embodime nt 2 | exemplary embodime nt 3 |
|---|---|---|---|---|---|---|
| zeta potential (mV) | -38.01 | -41.27 | -7.08 | -47.03 | -48.55 | -48.93 |

Referring to [Table 1], the zeta potential absolute value of Comparative Example 2 is larger than that of Comparative Example 1, confirming that the dispersion of the binder is improved by forming the SBR-Acryl core-shell structure. In the case of Comparative Example 3, in which an excessive amount of nanocellulose (CNC) was added, a large amount of agglomeration inside the binder occurred, as confirmed visually in Experimental Example 1, and dispersion was significantly reduced. Through exemplary embodiments 1 to 3, which show a zeta potential absolute value much higher than that of Comparative Example 2, where dispersion is relatively stable, when an appropriate amount of nanocellulose (CNC) is added to a binder with an SBR-Acryl core-shell structure, it is improving dispersion of the binder.

### Experimental Example 3

FIG. 2 is a graph showing the relationship between the shear strain and viscosity of the slurry of the Comparative Example 2 and exemplary embodiments 1 to 3 on a logarithmic scale. Referring to this, it can be seen that the viscosity of the slurry of exemplary embodiments 1 to 3, which was manufactured by adding an appropriate amount of nanocellulose (CNC) to the binder of the SBR-Acryl core-shell structure, increased compared to the slurry of Comparative Example 2. This is because the viscosity of the slurry is improved by the formation of hydrogen bonds between the binder of the SBR-Acryl core-shell structure and nanocellulose (CNC). Through this, it can be seen that slurry stability increases and more even coating is possible due to increased viscosity.

### Experimental Example 4

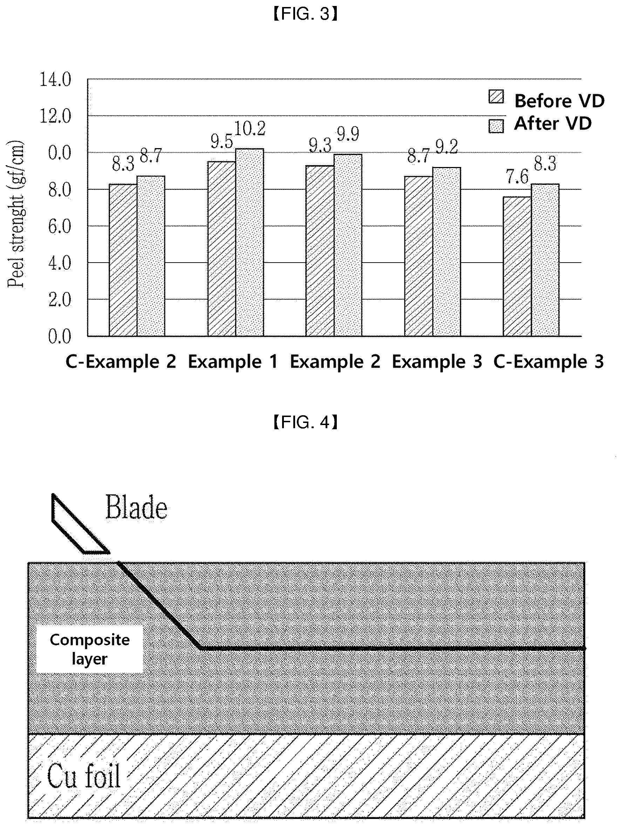

The electrodes manufactured in the Comparative Example 2, Comparative Example 3, and exemplary embodiments 1 to 3 were cut to a size of 25 mm in width and 100 mm in length. A double-sided adhesive tape with an area of 20 mm in width and a length of 40 mm was attached to an acrylic plate with an area of 40 mm in width and 100 mm in length. Attach the prepared electrode onto the double-sided adhesive tape and lightly press it 5 times with a hand roller. Mount this on a UTM (20kgf Load cell) and peel off about 25mm of one side of the negative electrode. Afterwards, fix the electrode to the upper clip of the tensile strength machine, and fix the tape attached to one side of the electrode to the lower clip. While peeling at a speed of 100 mm/min, the 180° peel strength was measured as shown in FIG. 3. Five or more specimens per sample were manufactured, the values before vacuum-drying (before VD) and after vacuum-drying (after VD) of the electrode were measured, and the average value was calculated. Vacuum-drying was carried out at 110°C for 4 hours. The results of FIG. 3 are summarized in [Table 2] below.

**(Table 2)**

| | Comparativ e Example 2 | Comparativ e Example 3 | exemplary embodimen t 1 | exemplary embodimen t 2 | exemplary embodimen t 3 |
|---|---|---|---|---|---|
| Peel strength before VD (gf/cm) | 8.3 | 7.6 | 9.5 | 9.3 | 8.7 |
| Peel strength after VD (gf/cm) | 8.7 | 8.3 | 10.2 | 9.9 | 9.2 |

According to the results in the [Table 2], when nanocellulose (CNC) is added to the SBR-Acryl core-shell structure binder at the content suggested in the present invention, the electrode binding power of the binder is higher than when nanocellulose (CNC) is not added. On the other hand, when an excessive amount of nanocellulose (CNC) is added, it can be seen that the binding power of the binder to the electrode decreases compared to the case where nanocellulose (CNC) is not added.

### Experimental Example 5

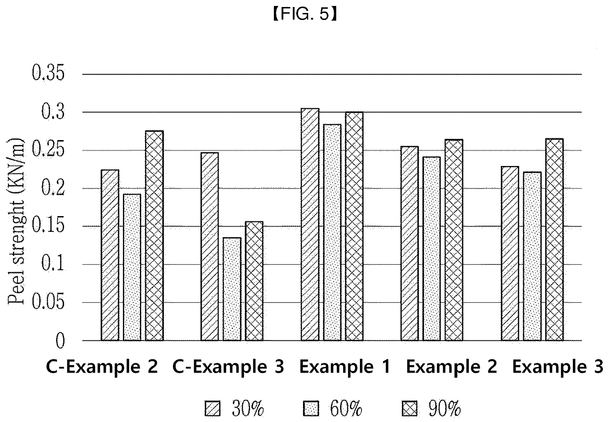

The dispersion of the binder was compared using SAICAS (Surface and Interfacial cutting analysis system) for Comparative Example 2, Comparative Example 3, and exemplary embodiments 1 to 3. Specifically, the slurry of Comparative Example 2, Comparative Example 3 and exemplary embodiment 1 to 3 was quantitatively uniformly coated on a 10µm Cu thin film and then dried to form a mixture layer (composite layer) of 1 to 1,000µm, and then this mixture layer was bonding characteristics were analyzed during cutting and peeling. The composite layer was cut to a certain depth with a micro blade and peeled off at a constant speed in a direction parallel to the hard interface of the Cu thin film and the composite layer. The force in the horizontal direction acting at this time was converted into bonding force, and this process is briefly expressed graphically in FIG. 4. At this time, the upper surface of the composite layer was cut at 30%, 60%, and 90% depth and peeled in the horizontal direction, and the force in each horizontal direction was measured, as shown in FIG. 5, and is summarized in [Table 3] below. Through this, the dispersion of the binder can be inferred.

**(Table 3)**

| cutting depth | Comparativ e Example 2 | Comparativ e Example 3 | exemplary embodiment 1 | exemplary embodiment 2 | exemplary embodiment 3 |
|---|---|---|---|---|---|
| 30% | 0.224 | 0.246 | 0.305 | 0.255 | 0.228 |
| 60% | 0.192 | 0.134 | 0.283 | 0.241 | 0.221 |
| 90% | 0.275 | 0.156 | 0.300 | 0.263 | 0.264 |

| | | | | | |
|---|---|---|---|---|---|
| (unit : kN/m) | | | | | |

As can be seen in Table 3, unlike Comparative Example 2 and Comparative Example 3, exemplary embodiments 1 to 3 have a small deviation of the force acting in the horizontal direction without cutting depth and relationship, confirming that the dispersion of the binder is excellent. By adding nanocellulose (CNC) at the content suggested in the present invention to the SBR-Acryl core-shell structured binder, a strong hydrogen bond is formed between the binder and nanocellulose (CNC) within the slurry. Because of this, the migration of the binder is suppressed during electrode drying, so even after electrode drying, the binder remains uniformly distributed throughout the entire composite layer as before electrode drying.

The present invention is not limited to exemplary embodiments but can be manufactured in a variety of different forms. In the technical field to which the present invention belongs, a person of an ordinary skill can understand that it can be implemented in another specific form without changing the technical idea or essential characteristics of the present invention. Therefore, the exemplary embodiments described above should be understood in all respects as illustrative and not limiting.

## Claims

1. A water-based binder for nanocellulose-based secondary battery electrode, comprising:
a latex particle with a core-shell structure comprising:
a core containing a rubbery polymer; and
a shell formed by combining one or two monomers selected from the group consisting of an acryl-based monomer and a non-acryl-based monomer on the surface of the core through a chemical reaction; and
a nanocellulose interacts with a functional group of the shell surface.

2. The water-based binder of claim 1, wherein:
the nanocellulose is selected from the group consisting of one or more types of cellulose nanofiber (CNF), cellulose nanocrystal (CNC), and bacterial cellulose (BC).

3. The water-based binder of claim 1, wherein:
the nanocellulose is 0.01 wt% to 1.0 wt% compared to the total mass of the latex particle solid.

4. The water-based binder of claim 1, wherein:
the chemical reaction is a polymerization reaction.

5. The water-based binder of claim 1, wherein:
the interaction is a hydrogen bond.

6. The water-based binder of claim 1, wherein:
the functional group on the shell surface is at least one selected from the group including carbonyl group, carboxyl group, and nitrile group.

7. The water-based binder of claim 1, wherein:
the rubbery polymer is one or more types selected from the group consisting of:
butadiene rubber, acryl rubber, ethylene-propylene copolymer rubber, styrene-butadiene copolymer rubber, acrylonitrile-butadiene copolymer rubber, isoprene rubber, ethylene-propylene-diene terpolymer rubber, polyorganosiloxane-polyalkyl(metha)acrylate rubber composite, and a mixture thereof.

8. The water-based binder of claim 1, wherein:
the acryl-based monomer is one or more types selected from the group consisting of:
methyl (metha)acrylate, ethyl (metha)acrylate, n-propyl (metha)acrylate, isopropyl (metha)acrylate, n-butyl (metha)acrylate, t-butyl (metha)acrylate, isobutyl (metha)acrylate, 2-ethylhexyl (metha)acrylate, 2-ethylbutyl (metha)acrylate, pentyl (metha)acrylate, hexyl (metha)acrylate, cyclohexyl (metha)acrylate, n-octyl (metha)acrylate, isooctyl (metha)acrylate, isononyl (metha)acrylate, decyl (metha)acrylate, dodecyl (metha)acrylate, tridecyl (metha)acrylate, tetradecyl (metha)acrylate, octadecyl (metha)acrylate and isobonyl (metha)acrylate.

9. The water-based binder of claim 1, wherein:
the non-acryl-based monomer is one or more types selected from the group consisting of:
(metha)acrylamide, N-methyl (metha)acrylamide, N,N-dimethyl (metha)acrylamide, (metha)acrylonitrile, N-vinyl pyrrolidone, N-vinyl caprolactam, N-vinyl caprolactone, styrene, 2-vinyl pyridine, 4-vinyl pyridine and vinyl acetate.

10. A slurry for a nanocellulose-based secondary battery electrode, comprising:
the water-based binder of any one of claim 1 to claim 9
a negative active material, and
a thickener.

11. The slurry of claim 10, wherein:
the thickener is one or more types selected from the group consisting of:
cellulose-based polymers such as carboxylmethylcellulose, methylcellulose, and hydroxypropylcellulose, and their ammonium and alkalimetal salts;
(modified) poly(metha)acrylic acid and its ammonium salts and alkalimetal salts;
polyvinylalcohol such as (modified) polyvinylalcohol, acrylic acid or a copolymer of acrylic acid salt and vinylalcohol, maleic anhydride or maleic acid, or copolymer of fumaric acid and vinylalcohol;
polyethyleneglycol;
polyethylene oxide;
modified polyacrylic acid;
oxidation starch;
phosphoric acid starch;
casein; and
acrylonitrile-butadiene copolymer hydride.

12. A secondary battery electrode manufactured using the slurry of claim 11.

13. The secondary battery electrode of claim 12, wherein:
in a manufacturing process, the peeling strength before vacuum-dry is more than 8.5 gf/cm, and the peeling strength after vacuum-dry is more than 9.0 gf/cm.
